(19) Europäisches Patentamt
European Patent Office
Office européen des brevets

(11) **EP 2 917 989 B1**

(12) **EUROPÄISCHE PATENTSCHRIFT**

(45) Veröffentlichungstag und Bekanntmachung des Hinweises auf die Patenterteilung:
**16.10.2019   Patentblatt 2019/42**

(21) Anmeldenummer: **13777097.0**

(22) Anmeldetag: **17.10.2013**

(51) Int Cl.:
***H02J 3/00*** *(2006.01)*

(86) Internationale Anmeldenummer:
**PCT/EP2013/071771**

(87) Internationale Veröffentlichungsnummer:
**WO 2014/072159 (15.05.2014 Gazette 2014/20)**

(54) **WINDENERGIEANLAGE UND VERFAHREN ZUM EINSPEISEN ELEKTRISCHER ENERGIE**

WIND POWER PLANT AND METHOD FOR SUPPLYING ELECTRICAL ENERGY

ÉOLIENNE ET PROCÉDÉ D'INJECTION D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.11.2012   DE 102012220582**

(43) Veröffentlichungstag der Anmeldung:
**16.09.2015   Patentblatt 2015/38**

(73) Patentinhaber: **Wobben Properties GmbH**
**26607 Aurich (DE)**

(72) Erfinder: **DIEDRICHS, Volker**
**18209 Bad Doberan (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102010 029 951     DE-A1-102011 053 237**

**Beschreibung**

Die vorliegende Erfindung betrifft ein Verfahren zum Einspeisen elektrischer Energie sowie eine Vorrichtung, insbesondere eine Windenergieanlage, zum Durchführen einer solchen Einspeisung.

In elektrische Stromnetze, die auch einfach als elektrische Netze oder elektrische Netzwerke nachfolgend bezeichnet werden können, speisen heutzutage zunehmend regenerative Energiequelle, wie Windenergieanlagen bzw. Windparks ein, die ein anderes elektrisches Verhalten aufweisen, als herkömmliche Großkraftwerke, die zum Einspeisen wenigstens einen Großgenerator verwenden. Somit werden zunehmend solche großen Generatoren durch andere Einspeiseeinheiten wie Wechselumrichter ersetzt. Dies wird von der Fachwelt auch als Substitution bezeichnet. Insbesondere in Ländern wir in Deutschland stellt sich ein vergleichsweise hoher Substitutionsgrad ein, es werden also vergleichsweise viele Generatoren durch andere Einspeiseeinheiten ersetzt. Das kann auch grundsätzliche Auswirkungen auf das Stromnetz haben. Insbesondere bestehen Befürchtungen, dass etwaige Symmetrierungswirkungen durch die bisherigen einspeisenden Generatoren mit zunehmendem Substitutionsgrad verloren gehen oder zumindest schwächer werden.

Aus diesem Grunde sieht die geplante Europäische Netzrichtlinie ENTSO-E vor, dass Netzbetreiber eine asymmetrische Stromeinspeisung fordern können. Der Begriff der Symmetrie bzw. der Asymmetrie bezieht sich hierbei auf die Beziehung der drei Phasen eines dreiphasigen Stromnetzes zueinander. Insbesondere bei einer asymmetrischen Störung im Stromnetz, wie bspw. der Kurzschluss zwischen zwei Phasen oder Kurzschluss einer Phase gegen Erde, ist vorgesehen, hier möglichst kompensierend einzuspeisen. Dabei ist insbesondere dann von einer Störung auszugehen, wenn die tatsächliche Spannung im Netz zumindest einer Phase von ihrem Sollwert und/oder von ihrem Nennwert, mehr als 10 % abweicht.

Insoweit existieren erste Ziele, die möglicherweise nicht weitreichend genug sein können.

Das Deutsche Patent- und Markenamt hat in der Prioritätsanmeldung folgenden Stand der Technik recherchiert: DE 10 2006 054 870 A1; US 7 423 412 B2; ANDERSSON, G.: Elektrische Energiesysteme - Vorlesungteil Energieübertragung, S. 127 - 147, EEH - Power Systems Laboratory, ETH Zürich, September 2009; Symmetrische Komponenten, in Wikipedia, Die freie Enzyklopädie, Version 23.04.2012, URL: http://de.wikipedia.org/w/index.php?title=Symmetrische_Komponenten&oldid=102361863 [abgerufen am 29.07.2012].

Die Offenlegungsschrift DE 10 2011 053 237 A1 betrifft ein Verfahren zur Stabilisierung eines elektrischen Versorgungsnetzes. Dazu werden die zur Zerlegung des aktuellen Netzzustandes erfassten Spannung in Mitsystemkomponenten und Gegensystemkomponenten zerlegt, Mitsytem- und Gegensystemkomponenten eines Kompensationsstromes als Funktion der Abweichung der Mitsystem- und Gegensystemkomponenten des Netzzustandes von Referenzwerten bestimmt und ein entsprechender Kompensationsstrom eingespeist.

Die Offenlegungsschrift DE 10 2010 029 951 A1 betrifft ein Verfahren zum Einspeisen elektrischer Energie in ein dreiphasiges Wechselspannungsnetz. Dort wird ein Mitsystem des einzuspeisenden Stroms erzeugt und es wird ein Gegensystem des einzuspeisenden Stroms erzeugt und das Mitsystem und das Gegensystem werden dann zu dem einzuspeisenden Strom überlagert und der so zusammengesetzte Strom in das dreiphasige Wechselspannungsnetz eingespeist.

Der vorliegenden Erfindung liegt somit die Aufgabe zugrunde, zumindest eines der oben genannten Probleme zu adressieren. Insbesondere soll eine Lösung vorgeschlagen werden, die die Netzqualität verbessert, oder zumindest einen Beitrag dazu leistet, dass die Netzqualität nicht oder nicht signifikant abnimmt. Zumindest soll zu bisher bekannten Konzepten eine alternative Lösung vorgeschlagen werden.

Erfindungsgemäß wird somit ein Verfahren zum Einspeisen elektrischer Energie in ein elektrisches, dreiphasiges Stromnetz gemäß Anspruch 1 vorgeschlagen.

Demnach wird elektrischer Strom mittels einer Einspeiseeinheit an einem Netzanschlusspunkt in das dreiphasige Stromnetz eingespeist. Weiterhin wird eine Asymmetrie im Stromnetz erfasst, was insbesondere über die Erfassung einer Gegensystemkomponente vorgenommen werden kann. Es wird als Reaktion darauf ein asymmetrischer Stromanteil in das Stromnetz eingespeist, um dadurch wenigstens teilweise die erfasste Asymmetrie zu kompensieren. Dabei wird vorgeschlagen, dass das Einspeisen dieses asymmetrischen Stromanteils so erfolgt, dass sich die Einspeiseeinheit im Bereich des sog. Gegensystems (engl. negative sequence) wie ein Verbraucher verhält. Die zielgerichtete Einspeisung des asymmetrischen Stromanteils, also die zielgerichtete asymmetrische Einspeisung, erfolgt dabei durch eine entsprechende Definition dieses Verbrauchers. Dieser Lösung liegt der Gedanke zugrunde, das Verhalten der Einspeiseeinheit als Teil des Stromnetzes zu verstehen und in dem Gesamtverhalten des Stromnetzes zu berücksichtigen.

Der Verbraucher wird als Impedanz $\underline{Z}^-$ beschrieben und über die folgende Gleichung festgelegt:

$$\underline{Z}^- = Z_n \, \frac{e^{j\varphi^-}}{k^-}.$$

Die Impedanz $\underline{Z}^-$ wird somit durch den Betrag der Nenn-Impedanz $Z_n$, den Einstell-Phasenwinkel $\varphi$ und den skalaren Einstellfaktor $k^-$ beschrieben.

Der Betrag der Nenn-Impedanz $Z_n$ kann durch die folgende Gleichung festgelegt werden:

$$Z_n = \frac{V_n^2}{S_n}.$$

Demnach berechnet sich dieser Betrag der Impedanz $Z_n$ aus der Netzspannung $V_n$, die hier quadratisch im Zähler eingeht, und aus der eingespeisten Scheinleistung $S_n$, die hier im Nenner des Quotienten eingeht. Es wird rein vorsorglich darauf hingewiesen, dass $Z_n$ zur besseren Veranschaulichung als Betrag der Nenn-Impedanz bezeichnet wird. Tatsächlich hängt der Betrag der Impedanz $\underline{Z}^-$ natürlich auch von dem Einstellfaktor $k^-$ und Einstell-Phasenwinkel $\varphi$ ab.

Über den Einstellfaktor $k^-$ und Einstell-Phasenwinkel $\varphi$ ist somit die Größe der negativen Impedanz einstellbar und damit bedarfsabhängig vorgebbar. Darüber hinaus wird vorgeschlagen, den Einstell-Phasenwinkel bedarfsabhängig vorzugeben. Es wird somit weitergegangen, als bspw. lediglich eine Reaktanz, also eine Impedanz mit einem Einstell-Phasenwinkel von 90° bzw. -90° vorzusehen, in dem auch der Winkel zusätzlich zur Amplitude bedarfsabhängig eingestellt wird.

Gemäß einer Ausführungsform wird vorgeschlagen, dass der Einstellfaktor $k^-$ und der Einstell-Phasenwinkel $\varphi$ der Impedanz abhängig von wenigstens einer Netzeigenschaft eingestellt wird bzw. werden. Die Vorgabe bzw. Einstellung dieser Impedanz orientiert sich somit nicht allein an aktuellen Zuständen im Stromnetz, dass grundsätzlich auch vereinfachend als Netz bezeichnet wird, sondern berücksichtigt auch Netzeigenschaften, also Eigenschaften des Stromnetzes. Die Spannungshöhe im Netz, eine vorliegende Asymmetrie oder auch eine Störung im Netz sind Beispiele für Netzzustände. Das Verhältnis des Blindwiderstandes zum Wirkwiderstand des Stromnetzes, was auch als X/R-Verhältnis bezeichnet wird, ist ein Beispiel für eine Netzeigenschaft. Diese und andere Netzeigenschaften sind insbesondere bezogen auf den Netzanschlusspunkt zu sehen. Damit sind solche Netzeigenschaften regelmäßig auch abhängig von der geographischen Lage des Netzanschlusspunktes, jedenfalls bezogen auf das betrachtete Stromnetz.

Es wird somit vorgeschlagen, über eine Betrachtung der aktuellen Netzzustände hinaus Netzeigenschaften mit einzubeziehen.

Vorzugsweise wird der Einstell-Phasenwinkel $\varphi$ in einem Bereich von 0°-90° eingestellt, wobei er umso größer eingestellt wird, je größer am Netzanschlusspunkt das Verhältnis des Blindwiderstandes zum Wirkwiderstand des Stromnetzes ist, also je größer das X/R-Verhältnis ist. Bei einem großen X/R-Verhältnis, bspw. im Bereich von 10-15, kann der Einstell-Phasenwinkel nahe 90° eingestellt werden. Ist dieses Verhältnis kleiner und hat es bspw. einen Wert von etwa 2, um ein Beispiel zu nennen, kann eine Einstellung im Bereich von 50°-60° vorgeschlagen werden. Zusätzlich zu den Zuständen im Netz kann somit diese Netzeigenschaft, die auch ein Netzcharakteristikum sein kann, mit berücksichtigt werden.

Vorzugsweise wird ein Ersatzschaltbild des Stromnetzes für den Einspeisepunkt erstellt und dient als Grundlage für die Einstellung des Verbrauchers, insbesondere der Impedanz. Insbesondere werden der Einstell-Phasenwinkel $\varphi$ und/oder der Einstellfaktor $k^-$ abhängig von dem erfassten Ersatzschaltbild eingestellt. Ein solches Ersatzschaltbild, das insbesondere relevante Netzeigenschaften wiedergeben soll, kann an dem Netzanschlusspunkt bzw. bezogen auf den Netzanschlusspunkt auch einmalig oder zumindest selten erstellt werden. Dieses Ersatzschaltbild, das die Netzeigenschaften wiedergibt, unterliegt somit, wie die beschriebenen Netzeigenschaften, keiner oder nur geringen Änderungen. Zumindest ändern sich die Netzeigenschaften grundsätzlich seltener oder langsamer, als Netzzustände.

Vorzugsweise wird die Asymmetrie des Stromnetzes dadurch erfasst, dass eine Netzgegensystemkomponente der elektrischen Spannung im Stromnetz erfasst bzw. bestimmt wird. Es werden also die Spannungen der drei Phasen erfasst und nach der Methode der symmetrischen Komponenten in ein Mitsystem und ein Gegensystem zerlegt. Der Vollständigkeit halber wird darauf hingewiesen, dass das Nullsystem, dass in der Theorie der Methode der symmetrischen Komponenten ebenfalls enthalten ist, regelmäßig zu vernachlässigen ist. Die Asymmetrie kann somit auf einfache Art und Weise über die Betrachtung der Gegensystemkomponente berücksichtigt werden. Außerdem oder zusätzlich wird gemäß einer Ausführungsform vorgeschlagen, dass der asymmetrische Stromanteil als Gegensystemkomponente vorgegeben bzw. eingespeist wird. Somit wird eine Gegensystemkomponente nicht nur zum Messen, sondern auch zum konkreten Einspeisen oder zumindest vorgegeben für die Einspeisung, verwendet.

Vorzugsweise wird als Einspeiseeinheit ein Wechselrichter verwendet. Zumindest umfasst die Einspeiseeinheit einen solchen Wechselrichter und verwendet diesen auch maßgeblich zum Einspeisen. Durch die Verwendung einer solchen Einspeiseeinheit wird es möglich, regenerativ erzeugte elektrische Energie unter Berücksichtigung von Netzanforderungen in das Stromnetz einzuspeisen. Durch einen solchen Wechselrichter kann der einzuspeisende Strom im Grunde beliebig nach Betrag, Frequenz und Phase auch dynamisch eingestellt werden. Dadurch lässt sich dem Wechselrichter als Einspeiseeinheit das gewünschte Verhalten als Verbraucher bzw. Impedanz als Eigenschaft vorgeben.

Vorzugsweise beinhaltet das vorgeschlagene Verfahren auch eine Überprüfung, ob eine asymmetrische Netzstörung im Stromnetz vorliegt. Die asymmetrische Einspeisung, wie sie in wenigstens einer der vorstehenden Ausführungsformen beschrieben wurde, wird dabei für den Fall vorgeschlagen, dass keine asymmetrische Netzstörung erfasst wurde. Die Einspeiseeinheit soll sich also dann wie ein Verbraucher, insbesondere Impedanz, verhalten, wenn keine asymmetrische Netzstörung vorliegt. Diese beschriebenen Verfahren sind somit insbesondere vorgesehen zur Berücksichtigung, insbesondere Verbesserung der Netzqualität im Normalbetrieb des elektrischen Stromnetzes.

Gemäß einer Ausführungsform wird in ein Mittelspannungsnetz eingespeist und dafür der Einstell-Phasenwinkel $\varphi$ auf einen Wert im Bereich von 40°-70°, insbesondere 50°-60° eingestellt. Insbesondere für Mittelspannungsnetze ist mit einem vergleichsweise kleinen X/R-Verhältnis zu rechnen, dass zum Bespiel im Bereich von 2 liegen kann. Somit wird vorgeschlagen, eine entsprechende Impedanz einzustellen, die durch den genannten Einstell-Phasenwinkel besser an die Eigenschaft eines solchen Mittelspannungsnetzes angepasst ist, als bei Verwendung eines anderen Einstell-Phasenwinkels, insbesondere eines größeren Einstell-Phasenwinkels.

Ferner wird eine Windenergieanlage zum Einspeisen elektrischer, aus Windenergie gewonnener Energie vorgeschlagen, die dazu vorbereitet ist, ein Verfahren gemäß wenigstens einer der oben beschriebenen Ausführungsformen zu verwenden. Insbesondere weist eine solche Windenergieanlage zum Einspeisen einen Wechselrichter als Einspeiseeinheit auf.

Durch den Wechselrichter, oder andere Einspeiseeinheit, erfolgt das Einspeisen einer Gegenstromkomponente und dadurch das Vorgeben der Impedanz des Gegensystems. Nachfolgend wird die Erfindung exemplarisch anhand von Ausführungsformen unter Bezugnahme auf die begleitenden Figuren näher erläutert.

Figur 1          zeigt eine Windenergieanlage in einer perspektivischen Ansicht.

Figuren 2a bis 2c     veranschaulichen ein Konzept einer asymmetrischen Stromeinspeisung.

Figur 3          veranschaulicht das vorgeschlagene Einspeiseverfahren gemäß einer Ausführungsform.

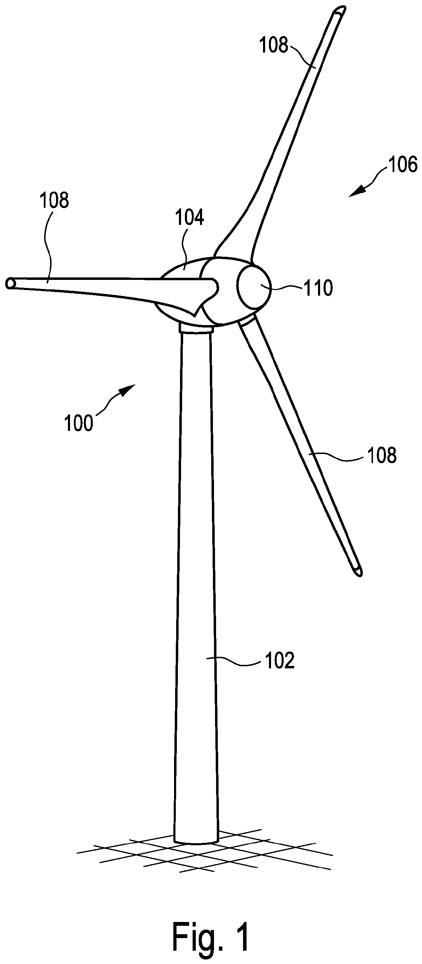

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

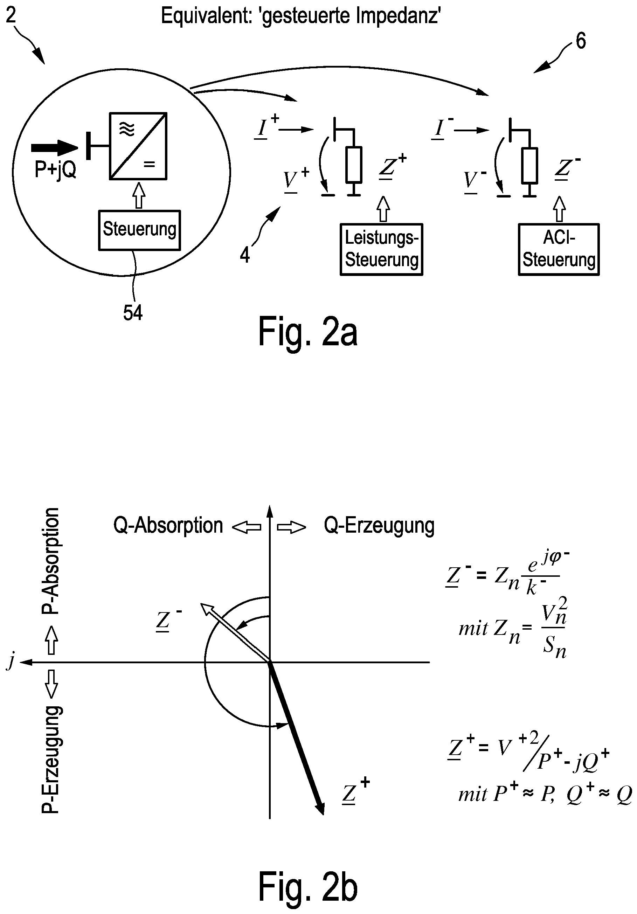

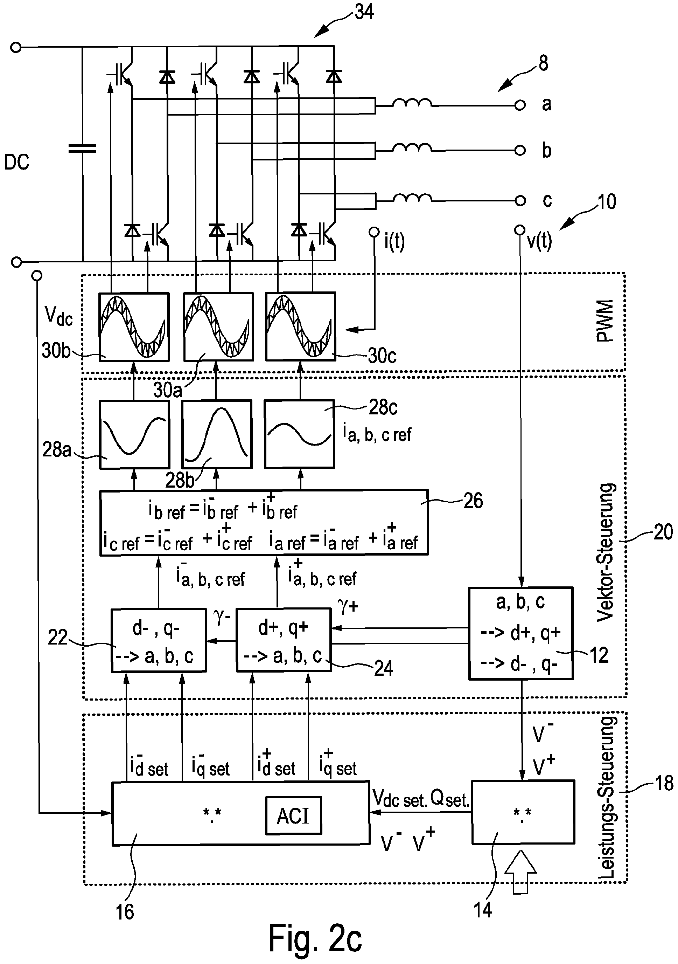

Bezugnehmend auf die Figuren 2a, 2b und 2c wird das Folgende erläutert.

Die Grundfrequenz der Spannungen (und Ströme) wird durch Phasoren in symmetrischen Komponenten wiedergeben:

$$v_a = \sqrt{2}V_a \cos\left(2\pi ft + \varphi_{V_a}\right) \Rightarrow \underline{V}_a = V_a e^{j\varphi_{V_a}}$$

$$v_b = \sqrt{2}V_b \cos\left(2\pi ft + \varphi_{V_b}\right) \Rightarrow \underline{V}_b = V_b e^{j\varphi_{V_b}}$$

$$v_c = \sqrt{2}V_c \cos\left(2\pi ft + \varphi_{V_c}\right) \Rightarrow \underline{V}_c = V_c e^{j\varphi_{V_c}}$$

und wie üblich transformiert:

$$\begin{vmatrix} \underline{V}_0 \\ \underline{V}_+ \\ \underline{V}_- \end{vmatrix} = \frac{1}{3} \begin{vmatrix} 1 & 1 & 1 \\ 1 & e^{j\frac{2}{3}\pi} & e^{j\frac{4}{3}\pi} \\ 1 & e^{j\frac{4}{3}\pi} & e^{j\frac{2}{3}\pi} \end{vmatrix} \begin{vmatrix} \underline{V}_a \\ \underline{V}_b \\ \underline{V}_c \end{vmatrix}$$

Der Unsymmetriegrad, der als Maß für Unsymmetrie verwendet wird, wird durch das Verhältnis der Amplitude des Gegensystem- bzw. 0-System-Phasors zum Mitsystemphasor angegeben:

$$V_- \, / \, V_+ \quad \text{bzw.} \quad V_0 \, / \, V_+$$

Neztgekoppelte Wechselrichter können interpretiert werden durch typische (zeit- und zustandsabhängige) Äquivalente in Bezug auf Grundfrequenz und (quasi-) stationäre Betriebsbedingungen. Eine für nicht isolierte Betriebsbedingungen des Wechselrichters anwendbare Option ist ein Impedanzäquivalent (Fig. 2a). Wegen der Vektorgruppe des Transformators in dem Testleistungssystem ist ein 0-System-Äquivalent für den betriebenen Wechselrichter nicht von Relevanz. Die Mitsystemimpedanz wird durch die Standardleistungssteuerungsebene der Wechselrichter-FACTS-Steuerarchitektur bestimmt; die Gegensystemimpedanz wird durch eine zusätzliche ACI-Steuerung gesteuert (Fig. 2c).

Beide Systemkomponentenimpedanzen beeinflussen das physikalische Verhalten gleichzeitig. Sie hängen von den tatsächlichen Systemkomponentenklemmspannungen und den tatsächlichen Amplituden und der Bezugnahme auf die Ströme der Wechselrichter ab, die unabhängig voneinander für Mitsystem- und Gegensystem gesteuert werden (Fig. 2b). Negative Realteile der Impedanz zeigen an, dass Wirkleistung in das Netz eingespeist wird, und für Blindleistung zeigen dies entsprechend negative Imaginärteile an. Die Interpretation dieser Wiedergabe ist auf nicht getrennte Betriebszustände des Wechselrichters begrenzt.

In Bezug auf die Amplitude der Systemkomponentenspannungen wird der Leistungsaustausch zwischen Wechselrichter und Netz während normaler Betriebszustände absolut durch das Mitsystem dominiert. Die Mitsystemimpedanz während eines normalen Betriebszustandes kann daher als Konsequenz auf tatsächliche Gesamtwechselrichterleistung und tatsächliche Mitsystemklemmspannung interpretiert werden.

Eine durch unabhängige ACI-Überlegungen spezifizierte Gegensystemimpedanz wird durch Gegensystemwechselrichterströme abhängig von einer tatsächlichen Gegensystemklemmspannung erreicht. Dies schafft funktional einen zusätzlichen ACI-Steuermodus, der deshalb zu der Leistungssteuerebene der Architektur der angewendeten Wechselrichtersteuerung gehört (Fig. 2 rechts). Eine Vektorsteuerung steuert das Eingangssignal für eine PWM-Steuerung wie üblich.

Die Abkürzung ACI, die aus dem englischen Begriff "Asymmetrical Current Injection" abgeleitet ist, steht für asymmetrische Stromeinspeisung. Rein vorsorglich wird darauf hingewiesen das FACTS für den englischen und auch im Deutschen für die Fachwelt geläufigen Begriff "Flexible AC Transmission System" steht.

Figur 2a illustriert somit die Aufteilung der Steuerung eines Wechselrichters 2 gemäß einer Ausführungsform dadurch, dass diese in die Steuerung und Einspeisung des Anteils 4 im Mitsystem (engl. positive sequence) und die Steuerung und damit Einspeisung des Anteils 6 im Gegensystem (engl. negative sequence) aufgeteilt wird. Somit wird für das Mitsystem eine Impedanz $\underline{Z}^+$ gesteuert, deren Realanteil negativ ist, die durch die Größen $\underline{I}^+\underline{V}^+$ definiert werden kann. Entsprechend verwendet das Gegensystem die Impedanz $\underline{Z}^-$ und damit die elektrischen Größen $\underline{I}^-V^-$.

Die Bedeutung dieser beiden Impedanzen $\underline{Z}^+$ und $\underline{Z}^-$ ist in dem Diagramm der Figur 2b in der komplexen Ebene veranschaulicht.

Figur 2c veranschaulicht in einem Schaltungsdiagramm, dass teilweise als Blockdiagramm dargestellt ist, die Durchführung der Einspeisung gemäß einer Ausführungsform.

An dem dreiphasigen Stromnetz 8, dessen Phasen mit den Buchstaben a, b und c bezeichnet sind, wird an der Messstelle 10 die Spannung v(t) aller drei Phasen erfasst und dem Zerlegungsblock 12 zugeführt. Der Zerlegungsblock 12 zerlegt das so erfasste dreiphasige System in die Mitsystemkomponente der Spannung $v^+$ und die Gegensystemkomponente der Spannung $v^-$. Das Ergebnis wird über einen weiteren Berechnungsblock 14, der Bedarfswerte wie die Blindleistung Q bestimmt, und zusammen mit den Mit- und Gegensystemkomponenten der Spannung an den Einspeisevorgabeblock 16 übergeben. Der Einspeisevorgabeblock 16 bestimmt dann die einzuspeisenden Mit- und Gegensystemanteile des einzuspeisenden Stroms und bestimmt dafür jeweils einen d- und einen q-Anteil für den Mitsystemstrom und den Gegensystemstrom. Dies kann auch verkürzt durch d-, q-, d+ und q+ angegeben werden. In den Einspeisevorgabeblock 16 kann auch Information über die Zwischenkreisspannung Vdc einfließen. Der Berechnungsblock 14 und insbesondere der Einspeisevorgabeblock 16 bilden somit den Leistungssteuerungsblock 18.

Die aus dem Leistungssteuerungsblock 18, insbesondere in dem Einspeisevorgabeblock 16 ermittelten Werte werden an den Vektorsteuerungsblock 20 übergeben, der in dem Gegensystemblock 22 bzw. dem Mitsystemblock 24 die entsprechenden Vektoren zur Steuerung der jeweiligen einzuspeisenden Phase bestimmen. Der Gegensystemblock 22 und der Mitsystemblock 24 tauschen zudem Informationen mit dem Zerlegungsblock 12 aus. Der Umsetzblock 26 setzt hierzu die beiden Vektoren des Mit- und Gegensystems des einzuspeisenden Stroms in die konkreten Vorgaben der einzuspeisenden Phasenströme um und gibt diese Informationen an die Phasenblöcke 28a, 28b bzw. 28c. Der Block 26 bestimmt dafür die einzelnen Ströme $i_{aref}$, $i_{bref}$ bzw. $i_{cref}$ gemäß der Berechnung: $i_{aref}=i\text{-}_{aref} + i\text{+}_{aref}$; $i_{bref}=i\text{-}_{bref} + i\text{+}_{bref}$ bzw. $i_{cref}=i\text{-}_{cref} + i\text{+}_{cref}$. Diese werden weiter an die Toleranzbandsteuerblöcke 30a, 30b bzw. 30c im Wechselrichterblock 32 gegeben. Die Toleranzbandsteuerblöcke 30a, 30b bzw. 30c führen über eine bekannte Toleranzbandsteuerung dann die konkrete Ansteuerung der Wechselrichterbrücken des Wechselrichters 34 aus und können dabei den Iststrom i(t) berücksichtigen.

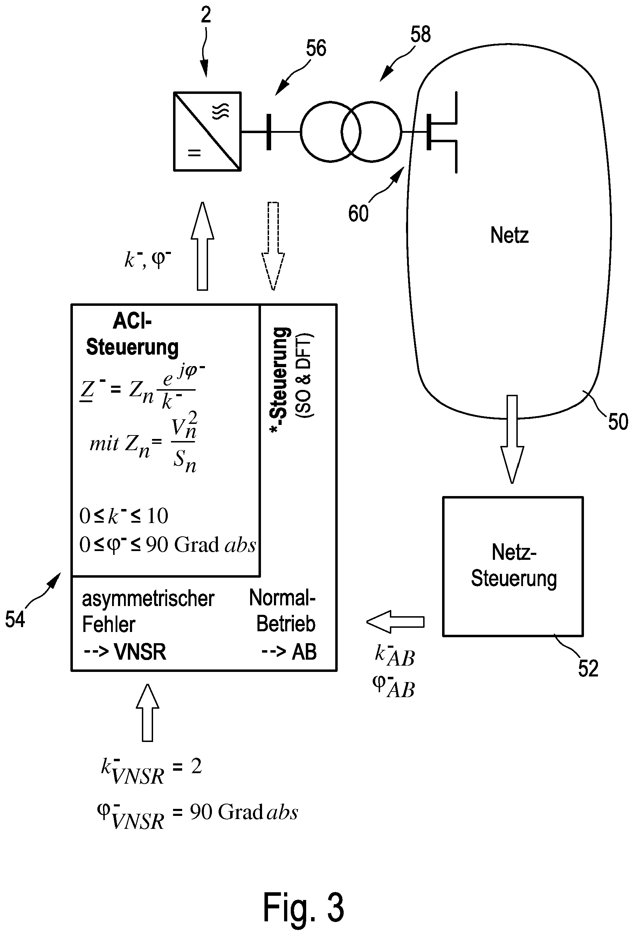

In Figur 3 ist das Stromnetz 15 dargestellt als Ausgangspunkt für die Steuerung gemäß einer Ausführungsform. Das Netz 50 wirkt, insbesondere über Messungen auf eine ganz allgemeine Steuerung, die als Netzsteuerblock 52 eingezeichnet ist. Diese allgemeine Netzsteuerung kann für das Einstellen einer Impedanz $\underline{Z}^-$ Werte für den Einstellfaktor $k^-$ bzw. $k^-_{AB}$ und den Einstell-Phasenwinkel $\varphi^-$ bzw. $\varphi^-_{AB}$ vorgeben. Der Index AB bezeichnet hierbei einen normalen Betriebszustand des Netzes 50, also einen Betriebszustand, in dem keine Netzstörung vorliegt. Gewisse Asymmetrien können aber vorliegen.

Die Figur 3 deutet auch an, dass für den Einstellfaktor $k^-$ bzw. $k_{VNSR}^-$ ein fester Wert wie bspw. der Wert 2 eingestellt wird, wenn eine asymmetrische Störung vorliegt. In diesem Fall wird für den Einstell-Phasenwinkel $\varphi$ bzw. $\varphi_{VNSR}^-$ ein absoluter Wert von 90° vorgegeben. Der Index VNSR, der eine Abkürzung des englischen Ausdrucks "Voltage Negative Sequence Reactance" ist, bezeichnet hier für den Störfall, dass für das Spannungsgegensystem eine Reaktanz vorgegeben wird. Für diesen Fall eines asymmetrischen Fehlers im Netz, wird somit kein variabler Einstell-Phasenwinkel $\varphi^-$ verwendet, sondern ein reiner Blindwiderstand als Verbraucher angesetzt.

Der Wechselrichtersteuerblock 54 steuert den Wechselrichter 2 entsprechend. Der Wechselrichter 2 entspricht hier dem der Figur 2a und auch das Bezugszeichen 54 für einen Wechselrichtersteuerblock 54 ist in Figur 2a verwendet worden. Figuren 2a und Figur 3 sind aber schematische Darstellungen und es können Unterschiede in Details vorliegen.

Die Steuerung des Wechselrichters 2 durch den Wechselrichtersteuerblock 54, wie es in Figur 3 veranschaulicht ist, beinhaltet diverse Steuerungsvorgänge und insoweit wird auch auf die in Figur 2c erläuterte Steuerung verwiesen. Zur Veranschaulichung des Aspektes der Vorgabe der Impedanz veranschaulicht die Figur 3 insoweit aber nur die Übergabe bzw. das Einwirken des Einstellfaktors $k^-$ und des Einstell-Phasenwinkels $\varphi^-$ auf den Wechselrichter 2. Die Wechselrichtersteuerung beschränkt sich aber nicht auf die Vorgabe dieser Werte.

Durch einen gestrichelten Pfeil ist auch eine etwaige Rückwirkung des Wechselrichters 2 bzw. vorhandener Größen an dem Wechselrichterausgang 56 auf den Wechselrichtersteuerblock 54 und damit auf die Wechselrichtersteuerung angezeigt. Schließlich gibt der Wechselrichter 2 einen einzuspeisenden, dreiphasigen, asymmetrischen Strom an seinem Wechselrichterausgang 56 aus und speist ihn über den exemplarisch dargestellten Transformator 58 in das Netz 50 am Netzanschlusspunkt 60 ein.


**Patentansprüche**

1. Verfahren zum Einspeisen elektrischer Energie in ein elektrisches, dreiphasiges Stromnetz (8) umfassend die Schritte:

   - Einspeisen elektrischen Stroms mittels einer Einspeiseeinheit (2) an einem Netzanschlusspunkt (60),
   - Erfassen einer Asymmetrie im Stromnetz (8), insbesondere einer Gegensystemkomponente im Stromnetz (8),
   - Einspeisen eines asymmetrischen Stromanteils in das Stromnetz (8) zum wenigstens teilweisen Kompensieren der erfassten Asymmetrie, wobei das Einspeisen des asymmetrischen Stromanteils so erfolgt, dass sich die Einspeiseeinheit (2) dafür wie ein Verbraucher (6) verhält,

   **dadurch gekennzeichnet, dass**
   der Verbraucher (6)
   im Gegensystem als Impedanz $Z^-$ beschrieben wird mit dem Zusammenhang

   $$\underline{Z}^- = Z_n \frac{e^{j\varphi^-}}{k^-}$$

   in dem $Z_n$ den Betrag der Impedanz, $\varphi^-$ einen Einstell-Phasenwinkel und $k^-$ einen skalaren Einstellfaktor beschreibt.

2. Verfahren nach Anspruch 1,
   **dadurch gekennzeichnet, dass**
   der Einstellfaktor $k^-$ und/oder der Einstell-Phasenwinkel $\varphi^-$ der Impedanz abhängig von wenigstens einer Netzeigenschaft eingestellt werden.

3. Verfahren nach Anspruch 1 oder 2,
   **dadurch gekennzeichnet, dass**
   der Einstell-Phasenwinkel $\varphi^-$ in einem Bereich von 0-90° eingestellt wird, wobei er umso größer eingestellt wird, je größer am Netzanschlusspunkt das Verhältnis des Blindwiderstandes zum Wirkwiderstand (X/R-Verhältnis) des Stromnetzes ist.

4. Verfahren nach einem der vorstehenden Ansprüche,
   **dadurch gekennzeichnet, dass**
   ein Ersatzschaltbild des Stromnetzes (8) für den Einspeisepunkt (10) erstellt wird und abhängig von dem erstellten Ersatzschaltbild der Verbraucher (6) bzw. die Impedanz, die den Verbraucher (6) beschreibt eingestellt wird, insbesondere dass der Einstell-Phasenwinkel $\varphi$ und/oder der Einstellfaktor $k^-$ abhängig von dem erfassten Ersatzschaltbild eingestellt werden.

**5.** Verfahren nach einem der vorstehenden Ansprüche,
**dadurch gekennzeichnet, dass**
die Asymmetrie dadurch erfasst wird, dass eine Gegensystemkomponente ($V^-$) der elektrischen Spannung im Stromnetz (8) erfasst wird und/oder dass der asymmetrische Stromanteil als Gegensystemkomponente eingespeist wird.

**6.** Verfahren nach einem der vorstehenden Ansprüche,
**dadurch gekennzeichnet, dass**
die Einspeiseeinheit (2) ein Wechselrichter (2) ist oder umfasst.

**7.** Verfahren nach einem der vorstehenden Ansprüche,
**dadurch gekennzeichnet, dass**
überprüft wird, ob eine asymmetrische Netzstörung im Stromnetz (8) vorliegt und wobei eine asymmetrische Einspeisung derart, dass sich die Einspeiseeinheit (2) wie ein Verbraucher (6) verhält, dann erfolgt, wenn keine asymmetrische Netzstörung erfasst wurde.

**8.** Verfahren nach einem der Ansprüche1 bis 7,
**dadurch gekennzeichnet, dass**
in ein Mittelspannungsnetz eingespeist wird und dafür der Einstell-Phasenwinkel $\varphi$ auf einen Wert im Bereich von 40-70°, insbesondere 50-60° eingestellt wird, und/oder dass für den Einstellfaktor $k^-$ ein Wert im Bereich von 0 bis 10 eingestellt wird.

**9.** Windenergieanlage (100) zum Einspeisen elektrischer, aus Windenergie gewonnener Energie in ein elektrisches Stromnetz (8), ausgestaltet, ein Verfahren nach einem der vorstehenden Ansprüche auszuführen.

**10.** Windenergieanlage (100) nach Anspruch 8,
**dadurch gekennzeichnet, dass**
zum Einspeisen ein Wechselrichter (2) als Einspeiseeinheit (2) vorhanden ist.

**11.** Wechselrichter (2) zum Einspeisen elektrischer Energie in ein elektrisches Stromnetz (8), ausgestaltet, ein Verfahren nach einem der Ansprüche 1 bis 8 auszuführen und insbesondere mit einer Windenergieanlage betrieben zu werden.

**Claims**

**1.** Method for injecting electrical energy into an electrical, three-phase grid (8), comprising the steps of:

- injecting current by means of an injection unit (2) at a grid connection point (60),
- detecting an asymmetry in the grid (8), namely a negative sequence component in the grid (8),
- injecting an asymmetrical current portion into the grid (8) for, at least, partial compensation of the detected asymmetry, with injection of the asymmetrical current portion taking place such that the injection unit (2) behaves like a consumer (6),

**characterized in that**
the consumer (6) in the negative sequence is described as an impedance $Z^-$ with the correlation

$$\underline{Z}^- = Z_n \frac{e^{j\varphi^-}}{k^-},$$

where $Z_n$ describes the value of the impedance, $\varphi$ an adjustment phase angle and $k^-$ a scalar adjustment factor.

**2.** Method according to Claim 1,
**characterized in that**
the adjustment factor $k^-$ and/or the adjustment phase angle $\varphi$ of the impedance are set based on at least one net property.

3. Method according to Claim 1 or 2,
**characterized in that**
the adjustment phase angle $\varphi$ is set within a range of 0°-90°. The bigger the grid reactance to resistance ratio at the grid connection point (X/R ratio), the bigger such angle will be set.

4. Method according to one of the above Claims,
**characterized in that**
an equivalent circuit diagram of grid (8) is prepared for the injection point (10) and the consumer (6) or, respectively, the impedance describing such consumer (6) is set based on the prepared equivalent circuit diagram, in particular that the adjustment phase angle $\varphi$ and/or the adjustment factor $k^-$ are set based on the detected equivalent circuit diagram.

5. Method according to one of the above Claims,
**characterized in that**
the asymmetry is detected by detecting a negative sequence component ( $V^-$) of the voltage in the grid (8) and/or that the asymmetrical current portion is injected as a negative sequence component.

6. Method according to one of the above Claims,
**characterized in that**
the injection unit (2) is or comprises an inverter (2).

7. Method according to one of the above Claims,
**characterized in that**
it is examined whether there is an asymmetrical system incident in the grid (8), and whereby asymmetrical injection takes place such that the injection unit (2) behaves like a consumer (6) if no asymmetrical system incident was detected.

8. Method according to one of the Claims 1 through 7,
**characterized in that**
current is injected into a medium-voltage grid, and to this end the adjustment phase angle $\varphi$ is set to a value in the range of 40°-70°, in particular 50°-60°, and/or that a value in the range of 0 to 10 is set for the adjustment factor $k^-$.

9. Wind power installation (100) for injecting electrical energy generated from wind energy into an electric grid (8), adapted for the application of a method according to one of the above Claims.

10. Wind power installation (100) according to Claim 8,
**characterized in that**
an inverter (2) exists as an injection unit (2) for injection.

11. Inverter (2) for injecting electrical energy into an electric grid (8), adapted for the application of a method according to one of the Claims 1 through 8 and, in particular, for being operated with a wind power installation.

**Revendications**

1. Procédé servant à injecter une énergie électrique dans un réseau d'alimentation (8) électrique triphasé, comprenant les étapes :

 - d'injection d'un courant électrique au moyen d'une unité d'injection (2) au niveau d'un point de raccordement au réseau (60),
 - de détection d'une asymétrie dans le réseau d'alimentation (8), spécifiquement d'une composante de contre-système dans le réseau d'alimentation (8),
 - d'injection d'une partie de courant asymétrique dans le réseau d'alimentation (8) pour compenser au moins en partie l'asymétrie détectée, dans lequel l'injection de la partie de courant asymétrique est effectuée de telle sorte que l'unité d'injection (2) se comporte à cet effet comme un consommateur (6),

**caractérisé en ce que**

le consommateur (6) est décrit dans le contre-système comme une impédance Z⁻ avec la relation

$$\underline{Z}^- = Z_n \frac{e^{j\varphi^-}}{k^-}$$

,

dans laquelle $Z_n$ décrit la valeur de l'impédance, $\varphi^-$ un angle de phase de réglage et $k^-$ un facteur de réglage scalaire.

2. Procédé selon la revendication 1,
   **caractérisé en ce que**
   le facteur de réglage $k^-$ et/ou l'angle de phase de réglage $\varphi^-$ de l'impédance sont réglés en fonction d'au moins une propriété de réseau.

3. Procédé selon la revendication 1 ou 2,
   **caractérisé en ce que**
   l'angle de phase de réglage $\varphi^-$ est réglé dans une plage de 0 - 90°, dans lequel plus le rapport de la réactance par rapport à la résistance active (rapport X/R) du réseau d'alimentation est important au niveau du point de raccordement au réseau, plus il est réglé avec une valeur importante.

4. Procédé selon l'une quelconque des revendications précédentes,
   **caractérisé en ce que**
   un schéma de câblage de rechange du réseau d'alimentation (8) est créé pour le point d'injection (10) et le consommateur (6) ou l'impédance, qui décrit le consommateur (6), est réglé en fonction du schéma de câblage de rechange créé, en particulier que l'angle de phase de réglage $\varphi^-$ et/ou le facteur de réglage $k^-$ sont réglés en fonction du schéma de câblage de rechange détecté.

5. Procédé selon l'une quelconque des revendications précédentes,
   **caractérisé en ce que**
   l'asymétrie est détectée **en ce qu'**une composante de contre-système (V⁻) de la tension électrique est détectée dans le réseau d'alimentation (8), et/ou que la partie de courant asymétrique est injectée en tant que composante de contre-système.

6. Procédé selon l'une quelconque des revendications précédentes,
   **caractérisé en ce que**
   l'unité d'injection (2) est ou comprend un onduleur (2).

7. Procédé selon l'une quelconque des revendications précédentes,
   **caractérisé en ce que**
   il est vérifié si un dérangement de réseau asymétrique est présent dans le réseau d'alimentation (8) et dans lequel une injection asymétrique telle que l'unité d'injection (2) se comporte comme un consommateur (6) est alors effectuée quand aucun dérangement de réseau asymétrique n'a été détecté.

8. Procédé selon l'une quelconque des revendications 1 à 7,
   **caractérisé en ce que**
   une injection dans un réseau à tension moyenne est réalisée et à cet effet l'angle de phase de réglage $\varphi^-$ est réglé sur une valeur dans la plage de 40 - 70°, en particulier de 50 - 60°, et/ou qu'une valeur dans la plage de 0 à 10 est réglée pour le facteur de réglage $k^-$.

9. Eolienne (100) servant à injecter une énergie électrique obtenue à partir d'une énergie éolienne dans un réseau d'alimentation (8) électrique, configurée pour mettre en oeuvre un procédé selon l'une quelconque des revendications précédentes.

10. Eolienne (100) selon la revendication 8,
    **caractérisée en ce que**
    pour l'injection, un onduleur (2) est présent en tant qu'unité d'injection (2).

11. Onduleur (2) servant à injecter une énergie électrique dans un réseau d'alimentation (8) électrique, configuré pour mettre en oeuvre un procédé selon l'une quelconque des revendications 1 à 8 et en particulier pour fonctionner avec une éolienne.

Fig. 1

Equivalent: 'gesteuerte Impedanz'

Fig. 2a

Q-Absorption ⟸ ⟹ Q-Erzeugung

P-Absorption

P-Erzeugung

$$\underline{Z}^- = Z_n \frac{e^{j\varphi^-}}{k^-}$$

$$mit\ Z_n = \frac{V_n^2}{S_n}$$

$$\underline{Z}^+ = V^{+2} / P^+ - jQ^+$$

$$mit\ P^+ \approx P,\ Q^+ \approx Q$$

Fig. 2b

Fig. 2c

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006054870 A1
- US 7423412 B2
- DE 102011053237 A1
- DE 102010029951 A1

**In der Beschreibung aufgeführte Nicht-Patentliteratur**

- **ANDERSSON, G.** Elektrische Energiesysteme - Vorlesungsteil Energieübertragung. *EEH - Power Systems Laboratory,* September 2009, 127-147
- Symmetrische Komponenten, in Wikipedia. Die freie Enzyklopädie. 23. April 2012